# FASCICULE DE BREVET EUROPEEN

(11) **EP 0 950 021 B1**
(45) Date de publication et mention de la délivrance du brevet: **03.07.2002**
(21) Numéro de dépôt: 97913238.8
(22) Date de dépôt: 03.11.1997
(51) Int. Cl.: C01F 7/44

(54) **FABRICATION D'ALUMINE CALCINEE A TAILLE DE CRISTALLITE REGLEE A LA DEMANDE AVEC UNE FAIBLE DISPERSION**
HERSTELLUNG VON KALZINIERTES ALUMINIUMOXID MIT NACH BEDARF GESTEUERTE KRISTALLITGROSSE MIT EINE GERINGE DISPERSION
MANUFACTURE OF CALCINED ALUMINA WITH CRYSTALLITE SIZE ADJUSTED ON REQUEST WITH LOW DISPERSION

(30) Priorité: 04.11.1996 FR 9613622
(43) Date de publication de la demande: 20.10.1999
(73) Titulaire: ALUMINIUM PECHINEY, 75218 Paris Cedex 16 (FR)
(72) Inventeur: DEVILLE, Jean, F-13090 Aix en Provence (FR); LAMERANT, Jean-Michel, F-13320 Bel Air (FR)
(74) Mandataire: Mougeot, Jean-Claude
(86) Numéro de dépôt international: FR9701966
(87) Numéro de publication internationale: WO9819967

(56) Documents cités:
- EP-A- 0 105 025
- EP-A- 0 281 265
- EP-A- 0 558 794
- EP-A- 0 680 929
- DE-C- 521 124

## Description

### DOMAINE TECHNIQUE

L'invention concerne un procédé de fabrication d'alumine calcinée pour matériaux céramiques tels que les médias de broyage, ladite alumine calcinée étant constituée principalement d'agglomérats friables de particules élémentaires, ou cristallites, d'alumine alpha dont la taille moyenne peut varier de 0,5 à 4 micromètres avec une très faible dispersion autour de cette taille moyenne.

### ETAT DE LA TECHNIQUE

Les alumines calcinées se distinguent par la diversité de leurs applications résultant de la grande variété de leurs propriétés liées notamment à leur pureté, à leur taux de transformation en alumine alpha ou taux d'alphanisation lui-même fonction du degré de calcination, à la taille et à la morphologie de cristallites d'alumine alpha assemblées en agglomérats plus ou moins friables.

Ainsi, parmi les alumines calcinées, celles principalement constituées d'alumine alpha sont connues pour leurs propriétés de réfractarité, de dureté, d'isolation thermique et électrique et trouvent leurs principales applications dans les domaines des abrasifs, corps de broyage, réfractaires, verres, céramiques mécaniques et électriques. La nécessité d'améliorer sans cesse les performances des produits du marché et par suite la qualité des matériaux comme l'alumine entrant dans leur fabrication, a conduit par exemple les utilisateurs d'alumine calcinée à accroître leur exigence en matière de granulométrie, notamment en ce qui concerne la dimension et l'homogénéité des tailles de cristallite d'alumine. En effet ces caractéristiques conditionnent l'aptitude au frittage de l'alumine calcinée et par suite les propriétés du matériau fritté, notamment sa densité et sa dureté. A cet égard les poudres d'alumine calcinée constituées principalement d'agglomérats friables de cristallites d'alumine alpha dont la taille moyenne est comprise entre 0,5 et 4µm, de préférence centrée sur 2µm avec une distribution unimodale très resserrée desdites tailles de cristallite, sont très utilisées pour la fabrication des médias et corps de broyage.

Même s'il doit exclure a priori les procédés de préparation faisant appel à des mélanges de poudre d'alumine fine et plus grossière en raison de l'hétérogénéité de texture des grains résultant de degrés de calcination différents et d'une grande dispersion des tailles de cristallite, l'homme du métier dispose de plusieurs procédés pour réaliser ce type de poudre d'alumine calcinée. Toutefois aucun d'eux ne satisfait simultanément aux critères de qualité, de reproductibilité et de faible coût de production, pourtant déterminants quand il s'agit de produire plusieurs milliers de tonnes/an dans cette qualité d'alumine.

Ainsi le document US 1366016 (Reynolds) décrit un procédé de production d'alumine alpha à basse teneur en sodium par calcination d'un hydrate d'alumine ou d'alumine déjà calcinée issus du procédé Bayer en présence d'au moins 1% et de préférence de 3 à 10% en poids de poudre de silice de granulométrie supérieure à 44µm. A une température de calcination comprise entre 1260°C et 1540°C on obtient un taux d'alphanisation supérieur à 90% avec une majorité de particules élémentaires ou cristallites dont la taille reste inférieure à 2µm. Parallèlement dans cette plage de température la teneur résiduelle en sodium dans l'alumine calcinée est abaissée de façon très significative par suite de la formation de silicate de sodium qui est éliminé par tamisage avec l'excès de silice non combinée.

Ce procédé avant tout destiné à réduire la teneur en sodium des alumines provenant de la calcination de trihydrate d'alumine issu du procédé Bayer reste d'un coût d'exploitation élevé en raison de la nécessité de fournir un débit important d'additif siliceux, de réaliser en continu des analyses coûteuses pour contrôler la taille des cristallites et la pollution de l'alumine par le sodium et le silicium et enfin de procéder à un tamisage final de la totalité du produit pour limiter la pollution par la silice résiduelle et le silicate de sodium formé. Ce procédé présente de l'intérêt pour la fabrication de poudre d'alumine fine dont la teneur en sodium doit être réduite à moins de 500 ppm pour certaines applications.

D'autres procédés préconisent l'ajout, lors de la calcination de l'hydrate d'alumine obtenu selon le procédé Bayer d'un agent dit « minéralisant » à base d'halogénures et/ou de borures alcalins, destiné à favoriser la recristallisation de l'alumine en alumine alpha et donc à abaisser la température de début d'alphanisation. Ainsi selon US 4487756 (Alusuisse) il est possible d'obtenir par calcination entre 1200°C et 1400°C de l'alumine alpha dont 80% des cristallites ont une taille comprise entre 1 et 10µm, ce qui dans le cas présent reste insuffisant du point de vue de l'homogénéité des tailles de cristallites. Cette trop grande dispersion est liée à la difficulté de stabiliser sur la valeur prédéterminée le diamètre moyen de cristallite rendant ce type de procédé peu fiable au moins dans la plage granulométrique des diamètres moyens visés de 0,5 µm à 4 µm.

Pour favoriser la formation de microcristaux monodispersés d'alumine alpha le document US 4847064 (Alcoa) introduit dès l'étage de décomposition de la liqueur Bayer un promoteur à base d'alumine alpha qui est mélangée à l'amorce destinée à précipiter le trihydrate d'alumine. Après séchage, le trihydrate d'alumine précipité est calciné en présence d'un minéralisant comme décrit précédemment. Grâce au promoteur d'alumine alpha la température d'alphanisation est abaissée à moins de 1200°C alors que la taille moyenne des cristallites d'alumine alpha reste inférieure à 3µm.

Ce procédé permet donc d'obtenir les tailles de cristallite désirées mais il soumet le fabricant à une double contrainte :
- L'obligation de remonter très en amont du procédé pour agir sur les conditions de décomposition de la liqueur Bayer qui implique d'avoir une fabrication totalement intégrée depuis le traitement de la bauxite jusqu'à la calcination de l'hydrate d'alumine.
- L'obligation de contrôler parfaitement les conditions de décomposition de la liqueur Bayer en présence d'un promoteur d'alumine alpha dont les caractéristiques physico-chimiques doivent être tout-à-fait stabilisées. En effet de très petites fluctuations peuvent modifier sensiblement les caractéristiques de l'hydrate précipité et par suite de l'alumine calcinée avec notamment un plus grand risque de dispersion des tailles de cristallite rendant le procédé difficile à maîtriser industriellement.

On notera enfin que le procédé de production d'alumine monodispersable selon EP 0281265B (Sumitomo) met en oeuvre, lors de la calcination de l'hydrate d'alumine, un minéralisant à base de chlore, de chlorure alcalino-terreux ou de fluorure de sodium, combiné éventuellement avec une substance siliceuse pulvérulente dans le cas où l'hydrate d'alumine est très chargé en sodium. Ce procédé néanmoins ne permet pas d'obtenir par le seul réglage de la température et de la durée de calcination une alumine ayant, pour une taille moyenne de cristallite déterminée (comprise entre 1µm et 3µm dans les différents exemples cités), la répartition de taille de cristallite requise par la plupart des applications céramiques.

Pour réduire cette dispersion le document EP 0281265B préconise, préalablement, à la calcination de l'hydrate d'alumine un traitement spécifique de désagglomération qu'il revendique et qui consiste :
- à réaliser une pulvérisation mécanique des particules agglomérés d'hydrate d'alumine,
- à former une suspension aqueuse de l'hydrate ainsi pulvérisé
- à ajuster la viscosité de ladite suspension pour obtenir un additif thermiquement décomposable et non polluant,
- à sécher par pulvérisation la suspension pour obtenir une poudre qui peut être alors calcinée.

Si, après calcination, l'homogénéité des tailles de cristallite est très nettement améliorée, le surcoût d'une telle opération est considérable en terme d'exploitation industrielle. Une version simplifiée de ce procédé est décrite dans EP 277730B (Sumitomo) excluant la pulvérisation mécanique initiale des particules agglomérées d'hydrate d'alumine pour n'effectuer qu'un séchage par atomisation mais le résultat est moins probant.

La demande EP 0 680 929 ( SUMITOMO CHEMICAL CO) divulgue un procédé de fabrication de l'alumine alpha, utilisée comme matière première d'abrasifs ou de pièces frittées, à partir d'un matériau de départ de toute origine, pouvant être par exemple un hydrate d'alumine issu du procédé BAYER. Ce matériau de départ subit obligatoirement une granulation préalable afin d'augmenter sa densité non tassée, les particules ainsi obtenues étant ensuite calcinées dans une atmosphère contenant au moins 0.1% en volume d'un gaz halogène ou halogénure d'hydrogène, ledit gaz pouvant être généré au cours de la calcination par un composé halogéné solide ou liquide. Le matériau de départ est optionnellement mélangé à un agent régulateur de forme dans une proportion comprise entre 10⁻⁵ et 5 10⁻¹ en poids, de préférence 10⁻⁵ à 10⁻¹. Cet agent est choisi dans une longue liste de métaux simples faisant partie des alcalins, des alcalino-terreux, des terres rares, et des métaux de transition et où figurent également le silicium et le bore. Il peut s'agir aussi de composés tels qu'oxydes, nitrures, oxynitrures, carbures, carbonitrures, halogénures, borures, etc... de ces "métaux". Selon ce document, l'ajout du silicium ou de son oxyde permet d'augmenter le facteur de forme D/H, D étant la taille maximale d'une particule de structure hexagonale compacte dans une direction parallèle au plan hexagonal et H étant la dimension de la particule suivant la direction perpendiculaire au plan hexagonal. L'objectif visé par ce procédé est l'obtention d'une alumine ayant une bonne aptitude à la compaction quelle que soit la nature du matériau de départ.

### PROBLEME POSE

Ainsi, en dépit d'un art antérieur fourni, l'homme du métier ne dispose pas d'un procédé industriel fiable et peu coûteux pour la fabrication d'alumine calcinée pour application céramique dont la taille moyenne de cristallite puisse être réglée à la demande entre 0,5 micromètre et 4 micromètres et cela avec une faible dispersion des tailles de cristallite autour de la valeur centrale choisie.

### OBJET DE L'INVENTION

Le procédé selon l'invention apporte une solution à ce problème. Il repose sur le constat surprenant que, par une combinaison en proportions pondérales appropriées d'un minéralisant avec un additif siliceux uniformément et finement dispersé dans la charge d'hydrate d'alumine en début de calcination, il est possible d'obtenir de façon fiable dans les conditions industrielles usuelles de calcination, notamment de température et de durée, une alumine présentant les caractéristiques granulométriques requises.

Plus précisément l'invention concerne un procédé de fabrication d'alumine pour céramique par calcination de trihydrate d'alumine en présence d'un minéralisant tel qu'un composé halogéné et/ou un composé du bore, ladite alumine calcinée étant constituée d'agglomérats friables de particules élémentaires ou cristallite d'alumine alpha dont la taille moyenne est réglée à la demande avec une distribution unimodale resserrée des tailles de cristallite caractérisé en ce que la calcination en four industriel de la charge de trihydrate d'alumine, Al₂O₃ 3H₂O, à une température comprise entre 800°C et 1300°C pendant une durée de 1/2 heure à 4 heures est effectuée en présence simultanément d'un composé halogéné faisant office de minéralisant et d'un modificateur de recristallisation de l'alumine à base de silice.

Selon l'invention, ledit modificateur de recristallisation est introduit sous forme de particules microniques et est uniformément et intimement réparti dans la charge de trihydrate d'alumine en proportion pondérale de 300 à 5000 g de SiO₂ par tonne d'alumine exprimée en Al₂O₃.

Selon l'invention, ledit trihydrate d'alumine, obtenu par décomposition d'une solution sursaturée d'aluminate de sodium en présence d'amorce de trihydrate d'alumine selon le procédé Bayer, est constitué d'agglomérats de grains dont la taille est comprise entre 10 et 150 µm et contient comme impuretés résiduelles 0,2% à 0,5% de soude exprimée en Na₂O ainsi que 50 à 200 ppm de silice uniformément répartie dans le trihydrate d'alumine qu'il convient de prendre en compte pour déterminer la quantité totale requise de modificateur sous forme de SiO₂ à introduire dans la charge de trihydrate d'alumine.

Le composé halogéné faisant office de minéralisant est de préférence un composé fluoré choisi dans le groupe fluor, acide fluorhydrique, trifluorure d'aluminium, fluorures alcalins. Sous forme gazeuse, il peut être introduit et mélangé dans l'atmosphère du four. Il peut également, de préférence, être dispersé dans la charge de trihydrate d'alumine sous forme gazeuse, de solution aqueuse ou solide. L'apport en minéralisant est tel que l'alumine en sortie de four contient 20 à 80 g de fluor par tonne d'Al2O3. L'introduction du minéralisant génère une atmosphère faiblement fluorée dans le four, la proportion en volume de gaz halogéné étant comprise entre 0,01% et 0,09%.

Le four industriel est un four de calcination, de préférence sous atmosphère oxydante renouvelée. Il peut s'agir d'un four rotatif chauffé au gaz.

Le modificateur à base de silice introduit dans la charge de trihydrate d'alumine par apport externe est de préférence dispersé dans ladite charge, sous forme liquide ou sous forme d'une suspension aqueuse de particules de silice ou d'un composé siliceux générant de la silice par calcination. En dessous de 300 g par tonne d'alumine, l'effet du modificateur ne se fait pas particulièrement sentir, sans doute parce que le nombre de nuclei apportés par la silice est insuffisant. Au-dessus de 5000 g par tonne d'alumine, on constate un phénomène de formation de mottes, rendant la poudre impropre à son utilisation finale. De préférence, on choisira une proportion pondérale comprise entre 400 g et 1500 g de SiO₂ par tonne d'alumine. De préférence également, on introduit la silice sous forme de particules microniques et le mélange doit être intime de façon à aboutir à une répartition uniforme de ces ces particules.

La demanderesse a pu ainsi résoudre son problème de production industrielle, à faible coût, de poudre d'alumine calcinée destinée notamment après frittage à la fabrication de médias et corps de broyage. Dans ce type d'application l'obtention d'un matériau fritté homogène avec la plus forte densité possible (d ≥ 3,60) est essentielle pour obtenir une dureté et une résistance à l'abrasion suffisantes.

Il s'est avéré en fait au cours des nombreux essais réalisés que la présence d'un minéralisant dans le trihydrate d'alumine destiné à abaisser la température de début d'alphanisation aux environs de 1000°C et par suite la température de calcination était tout à fait compatible avec celle d'un composé siliceux agissant non plus dans sa fonction connue d'agent de désodage à plus de 1300°C mais dans une nouvelle fonction de modificateur de recristallisation et donc de grossissement des cristallites d'alumine alpha, formées dès 1000°C en présence de minéralisant. Cette fonction stabilisatrice des tailles de cristallite n'est toutefois effective qu'à la condition que le modificateur de recristallisation à base de silice soit réparti uniformément à la surface des grains de l'hydrate d'alumine sous forme d'une fine suspension aqueuse de particules de silice de grande finesse (1µm environ) et non directement sous forme de grains de silice grossiers. Ceci pour offrir lors de la calcination le maximum de surface d'échange avec les grains d'alumine en cours de formation et qui recristallisent superficiellement.

Ainsi par un apport contrôlé de silice dans une plage de température de calcination de préférence comprise entre 900°C et 1200°C et pour des durées de préférence comprises entre 1 heure et 3 heures, il devient tout à fait possible de régler la taille moyenne des cristallites d'alumine entre 0,5 µm et 4 µm avec une très faible dispersion autour de la valeur centrale choisie. A cet égard, il faut préciser que la taille moyenne de cristallite est déterminée ordinairement par le diamètre moyen D50 correspondant au pourcentage pondéral de passant cumulé à 50% déduit de la courbe de répartition granulométrique mesurée, après désagglomération du produit par diffraction laser (selon NF 11-666), par photosédimentation (selon NFX 11-682) ou par absorption de rayons X (selon NFX 11-683). Quant au degré de dispersion des tailles de cristallite autour de la taille moyenne ou D50, il est déterminé par le rapport des diamètres D90/D10 correspondant respectivement aux pourcentages pondéraux de passant cumulé respectivement à 90% et 10% déduits également de la courbe de répartition granulométrique précédente.

Dans le cas présent ce rapport D90/D10 doit rester inférieur à 6 et de préférence ne pas excéder 4. Il va de soi qu'un aussi faible degré de dispersion exclut toute méthode de préparation faisant appel à un mélange de deux ou plusieurs poudres d'alumine calcinée ayant des populations de tailles de cristallite différentes, mélange pour lequel le rapport D90/D10 est supérieur à 15.

En fait, comme il ressort de l'examen de l'état de la technique, le problème de l'homogénéité des tailles de cristallite se pose même pour les poudres d'alumine présentant une seule population de tailles de cristallite (distribution unimodale) car l'opération de calcination elle-même est un facteur d'hétérogénéité important notamment à l'échelle industrielle avec les fours à grand débit comme les fours rotatifs capables de calciner 15 à 20 t/heure de trihydrate d'alumine. En effet toute la masse de produit en mouvement dans le trommel en rotation (diamètre de 3 à 5 mètres et longueur de 60 à 100 mètres) n'est pas soumise rigoureusement au même cycle thermique compte tenu notamment d'un gradient thermique radial que la circulation d'air chaud dans l'axe du four ne peut complètement supprimer. C'est la raison pour laquelle une désagglomération préalable des grains de trihydrate d'alumine avant calcination (selon EP 0281265B), efficace si la calcination ultérieure du trihydrate d'alumine est effectuée en couche mince, par exemple en nacelle en four statique ou à passage, devient beaucoup moins déterminante sur la monodispersion des tailles de cristallite d'alumine calcinée si la calcination est effectuée en four rotatif industriel.

Tout l'intérêt du procédé selon l'invention est que par un ajout de silice dans la charge de trihydrate d'alumine dans les conditions précisées précédemment et sans modifier notablement les conditions habituelles de calcination en four industriel (température, débit d'alimentation en trihydrate d'alumine, teneur en minéralisant, débit air...), il devient possible de limiter les effets de facteurs d'hétérogénéité granulométrique comme les gradients de température et de concentration en minéralisant dans la charge de trihydrate d'alumine en modérant voire en uniformisant la vitesse de cristallisation superficielle des cristallites et par suite leur grossissement. Cette action stabilisatrice permet d'améliorer la précision du réglage des tailles de cristallites sur un diamètre prédéterminé compris entre 0,5 µm et 4 µm et cela avec une faible dispersion des tailles de cristallite.

Il faut encore préciser que la matière première pour mettre en oeuvre l'invention est du trihydrate d'alumine de qualité métallurgique destiné à la production d'aluminium par électrolyse car aisément disponible en grande quantité sur le marché. Ce trihydrate d'alumine, constitué d'agglomérats de grains dont la taille peut varier de 10 à 150µm (D50 de l'ordre de 80µm) est obtenu par décomposition d'une solution sursaturée d'aluminate de sodium en présence d'amorce de trihydrate d'alumine selon le procédé Bayer et contient notamment comme impuretés résiduelles 0.2% à 0,5% de soude exprimée en Na₂O ainsi que 50 à 200 ppm de silice uniformément répartie dans le trihydrate d'alumine mais qu'il convient de prendre en compte avec l'apport externe de silice pour déterminer la quantité totale de modificateur sous forme de SiO₂ présente dans la charge de trihydrate d'alumine.

Le modificateur de recristallisation introduit par apport externe est de préférence dispersé par pulvérisation dans la charge, soit sous forme liquide: composé siliceux (siloxane) dissous dans un solvant organique, acide fluosilicique H2SiF6, silicates alcalins ou fluosilicates alcalins en solution aqueuse, soit sous forme d'une suspension aqueuse de particules microniques de silice, de silicates alcalino-terreux ou de fluosilicates alcalino-terreux.

L'introduction du modificateur s'effectue dans la charge de trihydrate d'alumine humide avant séchage ou dans la charge de trihydrate d'alumine séché à moins de 200°C, c'est-à-dire à l'entrée du four de calcination, ou encore dans la charge d'alumine partiellement déshydratée, c'est-à-dire entre 200°C et 400°C dans la zone de précalcination.

Le procédé selon l'invention sera mieux compris par la description détaillée de sa mise en oeuvre.

### MISE EN OEUVRE DE L'INVENTION

Les essais industriels de fabrication de poudre d'alumine calcinée dont la taille moyenne de cristallite peut être réglée entre 0,5 µm et 4 µm avec une faible dispersion des tailles de cristallite définie par un rapport D90/D10 inférieur à 6 et de préférence inférieur à 4 ont été effectués dans un four rotatif chauffé au gaz dont la longueur totale est de 80 mètres et le diamètre de la chambre cylindrique de 4 mètres.

### Principales conditions opératoires

### a) Paramètres maintenus constants pendant toute la durée des essais correspondant à des conditions standard de calcination de trihydrate d'alumine en l'absence de modérateur à base de silice

Charge :
- trihydrate d'alumine humide (taux d'humidité moyen 5%)
- teneur moyenne en sodium exprimée en Na₂O/Al₂O₃ : 0,24%
- teneur en silice résiduelle exprimée en SiO₂/Al₂O₃ = 80 ppm
- débit d'alimentation du four 18 tonnes/heure exprimé en Al₂O₃ 3H₂O humide
- minéraliseur AlF₃ sous forme solide introduit dans Al₂O₃ 3H₂O humide à raison de 600 g de AlF₃ à l'heure, soit 37 g de F/tonne Al₂O₃
- débit de gaz (air + gaz de combustion) = 1330 ± 20 m3
- température de la zone de calcination 900°C à 1100°C
temps de séjour moyen du produit dans la zone de calcination : 2 heures.

### b) Paramètre variable

La teneur en modificateur à base de silice constituée dans le cas présent par une suspension aqueuse de particules microniques de silice (gel de silice référence TX3S de Rhône Poulenc) pulvérisée dans Al₂O₃ 3H₂O humide à l'entrée du four en régime de marche normale (sans apport externe de modificateur) selon 3 débits horaires :
. 24 L/Heure, de l'instant t=0 jusqu'à t=12 heures, correspondant à un taux de SiO₂ apportée à la charge d'alumine Al₂O₃ de 400 ppm qu'il faut majorer de la teneur résiduelle en silice (80 ppm) du trihydrate d'alumine soit au total 480 ppm SiO₂ (0,048%)
. 36 L/Heure, de l'instant t=12 heures jusqu'à t=24 heures, correspondant à un taux de SiO₂ apportée à la charge d'alumine Al₂O₃ de 600 ppm qu'il faut majorer de la teneur résiduelle en silice du trihydrate soit au total 680 ppm (0,068%)
. 48 L/Heure, de l'instant t=24 heures jusqu'à t=36 heures, correspondant à un taux de SiO₂ apportée à la charge d'alumine Al₂O₃ de 800 ppm qu'il faut majorer de la teneur résiduelle en silice du trihydrate soit au total 880 ppm (0,088%).

### c) Résultats

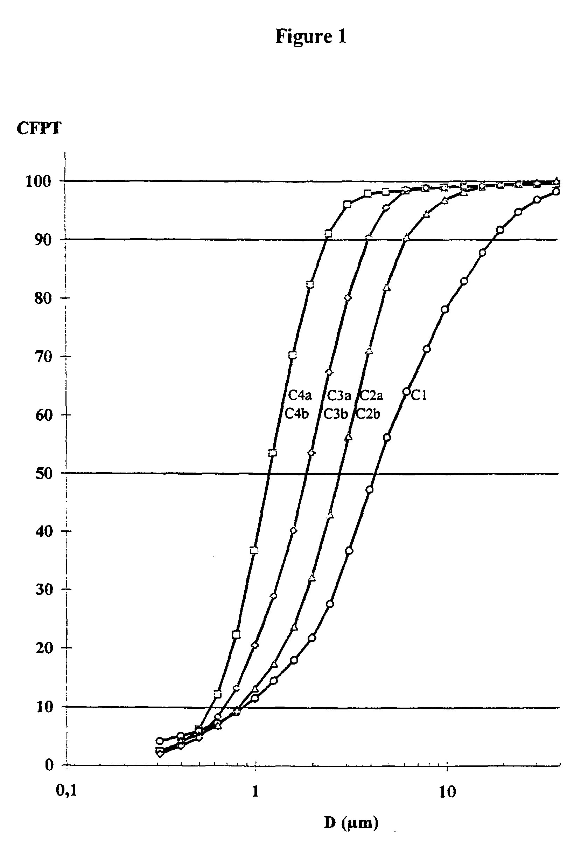

Les résultats des analyses effectuées sur les échantillons moyens d'alumine prélevés toutes les 2 heures en sortie de four sont regroupés dans le Tableau 1 ci-après ainsi que sur la figure 1 pour les courbes C1, C2a, C2b, C3a, C3b, C4a et C4b de répartition granulométrique (exprimée en % passant cumulé ou encore CPFT: *"cumulative percent finer than*") obtenues sur appareil Sédigraph 5100 Micromeritics (selon NFX 11-683).

A noter que, bien que non représentatives du degré de dispersion des tailles de cristallite, les mesures de surface spécifique BET (selon norme NF 12-621) ont été effectuées systématiquement sur chaque échantillon de poudre d'alumine prélevé, car elles donnent parallèlement au diamètre D50 déduit des courbes de répartition granulométrique des tailles de cristallite une bonne indication de l'évolution de l'état de finesse moyen de la poudre d'alumine calcinée et par le fait de la taille moyenne des cristallites en fonction des conditions opératoires.

**TABLEAU 1**

| **T/Heure** | **Débit gel silice L/H** | **SiO**_{**2**} **ppm** | **BET m**^{**2**}**/g** | **Na**_{**2**}**O ppm** | **D50 µm** | **D90 µm** | **D10 µm** | **D90/ D10** | **Ref. courbe granulom** |
|---|---|---|---|---|---|---|---|---|---|
| 0 | 24 | 80 | 0,61 | 2400 | 4,6 | 12 | 0,9 | 13 | **C1** |
| 2 | 24 | 80 | 0,65 | 2350 | | | | | |
| 4 | 24 | 320 | 0,77 | 2350 | 3,3 | 5,8 | 0,85 | 7 | |
| 6 | 24 | 435 | 0,82 | 2250 | | | | | |
| 8 | 24 | 490 | 0,85 | 2300 | 2,8 | 4,1 | 0,80 | 5 | **C2a** |
| 12 | 24 | 490 | 0,83 | 2400 | 2,9 | 3,9 | 0,80 | 5 | **C2b** |
| 14 | 36 | 570 | 0,86 | 2450 | | | | | |
| 16 | 36 | 570 | 0,91 | 2400 | 2,2 | 3,3 | 0,75 | 4,5 | |
| 18 | 36 | 645 | 0,95 | 2450 | | | | | |
| 20 | 36 | 725 | 0,98 | 2350 | 1,8 | 2,8 | 0,7 | 4 | **C3a** |
| 22 | 36 | 690 | 0,94 | 2250 | | | | | |
| 24 | 36 | 680 | 0,97 | 2250 | 1,9 | 2,8 | 0,7 | 4 | **C3b** |
| 26 | 48 | 710 | 0,98 | 2300 | | | | | |
| 28 | 48 | 790 | 1,05 | 2350 | 1,6 | 2,3 | 0,65 | 3,5 | |
| 30 | 48 | 840 | 1,15 | 2450 | | | | | |
| 32 | 48 | 910 | 1,20 | 2400 | 1,1 | 1,9 | 0,6 | 3 | **C4a** |
| 34 | 48 | 890 | 1,16 | 2300 | | | | | |
| 36 | 48 | 870 | 1,15 | 2350 | 1,2 | 1,9 | 0,6 | 3 | **C4b** |

### d) Observations

On constate que dans les conditions de calcination de l'art antérieur (c'est-à-dire en l'absence de modificateur), la taille moyenne des cristallites d'alumine calcinée prélevée en sortie de four à l'instant t=0 où l'on commence seulement à introduire à l'autre extrémité du four le modificateur, est de 4,6µm donc trop élevée avec une distribution de taille de grain D90/D10 ∼ 13 (selon courbe C1), donc trop élevée. La présence de seulement 80 ppm de silice résiduelle dans la charge de trihydrate d'alumine s'avère insuffisante pour ralentir le grossissement des cristallites d'alumine.

Avec un apport externe de modificateur à raison de 400 ppm de SiO₂ rapporté à Al₂O₃ (débit de 24 L/H) et donc une teneur en silice totale centrée sur 480 ppm (compte tenu de la silice résiduelle), mais pouvant varier de 400 à 500 ppm, il est possible, après neutralisation de la période transitoire d'environ 6 heures correspondant au temps moyen de séjour total du produit dans le four, d'obtenir une taille moyenne de cristallite D50 centrée sur 2,9/3µm avec un rapport D90/D10 de l'ordre de 5 et donc conforme à l'une des qualités de poudre d'alumine calcinée recherchée (voir courbes C2a et C2b).
De même en réglant l'apport externe de modérateur sur une teneur de 600 ppm de SiO₂ rapportée à Al₂O₃ (débit de 36 L/H) et donc sur une teneur en silice totale, incluant la silice résiduelle, centrée sur 680 ppm mais pouvant varier de 550 à 700 ppm, on obtient une taille moyenne de cristallite D50 centrée sur 1,8/2µm avec un rapport D90/D10 de l'ordre de 4 et donc conforme à une seconde qualité de poudre d'alumine calcinée recherchée (voir courbes C3a et C3b). A noter que les contrôles de dureté et les tests d'usure effectués sur des pièces frittées de densité comprise entre 3,60 et 3,65 destinées à la fabrication de médias de broyage et élaborées à partir de cette qualité de poudre ont été entièrement concluants.

Enfin en réglant l'apport externe de modérateur sur une teneur de 800 ppm de SiO₂ rapportée à Al₂O₃ (débit de 48 L/H) et donc sur une teneur en silice totale, incluant la silice résiduelle, centrée sur 880 ppm mais pouvant varier de 750 à 1000 ppm, on obtient une taille moyenne de cristallite D50 centrée sur 1/1,2µ avec un rapport D90/D10 de l'ordre de 3 et donc conformes à une troisième qualité de poudre d'alumine calcinée recherchée (voir courbes C4a et C4b).
On remarque enfin que quelle que soit la granulométrie de la poudre d'alumine calcinée obtenue, la teneur résiduelle en sodium exprimée en Na₂O/Al₂O₃ reste équivalente à celle du trihydrate d'alumine initial et systématiquement comprise entre 0,2% et 0,5%.

### AVANTAGES DU PROCEDE SELON L'INVENTION

Outre sa grande souplesse d'utilisation à l'échelle industrielle, le procédé selon l'invention s'avère à la fois fiable, facile à mettre en oeuvre puisque directement adaptable à des conditions standard de production, et par le fait d'un faible coût d'exploitation.

Son application ne se limite toutefois pas aux opérations de calcination où l'on agit seulement sur la quantité de modificateur pour ajuster la granulométrie de l'alumine calcinée. De façon évidente il peut s'appliquer aussi en combinaison avec d'autres paramètres de réglage de la taille des cristallites, comme la température de calcination et la teneur en minéralisants si, par exemple, la teneur en silice de la poudre d'alumine calcinée devient rédhibitoire pour certaines applications au-delà d'un certain seuil.

## Revendications

1. Procédé de fabrication d'alumine pour céramique par calcination de trihydrate d'alumine en présence d'un minéralisant tel qu'un composé halogéné et/ou un composé du bore, ladite alumine calcinée étant constituée d'agglomérats de cristallites d'alumine alpha **caractérisé en ce que** la calcination en four industriel de la charge de trihydrate d'alumine à une température comprise entre 800°C et 1300°C pendant une durée de 1/2 heure à 4 heures est effectuée en présence simultanément d'un composé halogéné faisant office de minéralisant et d'un modificateur de recristallisation de l'alumine, à base de silice, ledit modificateur de recristallisation étant introduit sous forme de particules microniques et étant uniformément et intimement réparti dans la charge de trihydrate d'alumine en proportion pondérale de 300 à 5000 g de SiO₂ par tonne d'alumine exprimée en Al₂O₃, ledit trihydrate d'alumine, obtenu par décomposition d'une solution sursaturée d'aluminate de sodium en présence d'amorce de trihydrate d'alumine selon le procédé Bayer, étant constitué d'agglomérats de grains dont la taille est comprise entre 10 et 150 µm et contenant comme impuretés résiduelles 0,2% à 0,5% de soude exprimée en Na₂O ainsi que 50 à 200 ppm de silice uniformément répartie dans le trihydrate d'alumine qu'il convient de prendre en compte pour déterminer la quantité totale requise de modificateur sous forme de SiO₂ à introduire dans la charge de trihydrate d'alumine.

2. Procédé selon la revendication 1 **caractérisé en ce que** le composé halogéné faisant office de minéralisant est un composé fluoré choisi dans le groupe fluor, acide fluorhydrique, trifluorure d'aluminium, fluorures alcalins.

3. Procédé selon la revendication 2 **caractérisé en ce que** le composé fluoré est introduit dans le trihydrate d'alumine sous forme gazeuse ou de solution aqueuse.

4. Procédé selon la revendication 2 ou 3 **caractérisé en ce que** le composé fluoré est introduit dans la charge de trihydrate d'alumine en proportion pondérale telle que l'alumine en sortie de four contienne de 20 à 80 g de fluor par tonne d'Al₂O₃.

5. Procédé selon l'une des revendication 2 à 4 **caractérisé en ce que** le composé fluoré génère une atmosphère légèrement halogénée dans le four de calcination, le gaz halogéné se trouvant présent dans une proportion inférieure à 0,09% en volume dans ladite atmosphère.

6. Procédé selon la revendication 1 **caractérisé en ce que** le modificateur de recristallisation à base de silice introduit dans la charge de trihydrate d'alumine par apport externe est dispersé sous forme liquide ou sous forme d'une suspension aqueuse de particules de silice ou d'un composé siliceux générant de la silice par calcination.

7. Procédé selon la revendication 1 ou 6 **caractérisé en ce que** le modificateur à base de silice est introduit dans la charge dans la proportion pondérale de 400 g à 1500 g de SiO₂ par tonne d'alumine Al₂O₃.

8. Procédé selon la revendication 1 **caractérisé en ce que** la température de calcination est comprise entre 900°C et 1200°C.

9. Procédé selon la revendication 1 **caractérisé en ce que** la durée de calcination est comprise entre 1 heure et 3 heures.

10. Procédé selon la revendication 1 **caractérisé en ce que** l'introduction du modificateur est effectuée dans la charge de trihydrate d'alumine humide avant séchage.

11. Procédé selon la revendication 11 **caractérisé en ce que** l'introduction du modificateur est effectuée dans la charge de trihydrate d'alumine séché à moins de 200°C à l'entrée du four de calcination.

12. Procédé selon la revendication 11 **caractérisé en ce** l'introduction du modificateur est effectuée dans la charge d'alumine partiellement déshydratée dans la zone de précalcination du four entre 200°C et 400°C.

13. Poudre d'alumine susceptible d'être obtenue par le procédé selon les revendications 1 à 14 de procédé **caractérisée par** un diamètre moyen de cristallite D50 centré sur 2,9 à 3µm avec un rapport D90/D10 de l'ordre de 5, une teneur en silice comprise entre 400 et 500 ppm et une teneur en sodium exprimée en Na₂O comprise entre 0,2% et 0,5%.

14. Poudre d'alumine susceptible d'être obtenue par le procédé selon les revendications 1 à 14 de procédé **caractérisée par** un diamètre moyen de cristallite D50 centré sur 1,8 à 2µm avec un rapport D90/D10 de l'ordre de 4, une teneur en silice comprise entre 550 et 700 ppm et une teneur en sodium exprimée en Na₂O comprise entre 0,2% et 0,5 %.

15. Poudre d'alumine susceptible d'être obtenue par le procédé selon les revendications 1 à 14 de procédé **caractérisée par** un diamètre moyen de cristallite D50 centré sur 1 à 1,2µm avec un rapport D90/D10 de l'ordre de 3, une teneur en silice comprise entre 750 et 1000 ppm et une teneur en sodium exprimée en Na₂O comprise entre 0,2% et 0,5%.

16. Procédé de fabrication de médias et corps de broyage **caractérisé en ce qu'**on utilise la poudre d'alumine selon l'une quelconque des revendications 13 à 15.

## Patentansprüche

1. Verfahren zur Herstellung von Aluminiumoxid für Keramik durch Kalzination von Aluminiumhydroxid in Anwesenheit eines Mineralisators wie einer Halogen- und/oder Borverbindung, wobei das kalzinierte Aluminiumoxid aus Agglomeraten von alpha-Aluminiumoxidkristalliten besteht, **dadurch gekennzeichnet, dass** die Kalzination der Aluminiumhydroxidbeschickung im Industrieofen bei einer Temperatur von 800 bis 1300°C während einer Dauer von 1/2 Stunde bis 4 Stunden in Anwesenheit einer als Mineralisator dienenden Halogenverbindung und gleichzeitig eines Aluminiumoxid-Rekristallisationsmodifiziermittels auf Siliziumbasis erfolgt, wobei das Rekristallisationsmodifiziermittel in Form von Teilchen im Mikrometerbereich zugeführt wird und in einem Gewichtsverhältnis von 300 bis 5000 g SiO₂ pro Tonne Aluminiumoxid, ausgedrückt in Al₂O₃, in der Aluminiumhydroxidbeschickung gleichmäßig und intensiv verteilt wird, wobei das Aluminiumhydroxid, das durch Zersetzung einer übersättigten Natriumaluminatlösung in Anwesenheit von Impfhydroxid nach dem Bayer-Verfahren gewonnen wird, aus Kornagglomeraten mit einer Korngröße von 10 bis 150 um besteht und als Restverunreinigungen 0,2 bis 0,5 % Natronlauge, ausgedrückt in Na₂O, sowie 50 bis 200 ppm Siliziumdioxid enthält, das gleichmäßig im Aluminiumhydroxid verteilt und bei der Bestimmung der in die Aluminiumhydroxidbeschickung einzubringenden Gesamtmenge an Modifiziermittel in Form von SiO₂ zu berücksichtigen ist.

2. Verfahren nach Anspruch 1, **dadurch gekennzeichnet, dass** die als Mineralisator dienende Halogenverbindung eine Fluorverbindung ist, die aus der Gruppe Fluor, Fluorwasserstoffsäure, Aluminiumtrifluorid, Alkalifluoride gewählt wird.

3. Verfahren nach Anspruch 2, **dadurch gekennzeichnet, dass** die Fluorverbindung gasförmig oder als wässrige Lösung in das Aluminiumhydroxid eingebracht wird.

4. Verfahren nach Anspruch 2 oder 3, **dadurch gekennzeichnet, dass** die Fluorverbindung in einem solchen Gewichtsverhältnis in die Aluminiumhydroxidbeschickung eingebracht wird, dass das aus dem Ofen austretende Aluminiumoxid 20 bis 80 g Fluor pro Tonne Al₂O₃ enthält.

5. Verfahren nach einem der Ansprüche 2 bis 4, **dadurch gekennzeichnet, dass** die Fluorverbindung eine leicht halogenhaltige Atmosphäre im Kalzinationsofen erzeugt, wobei das halogenhaltige Gas in einem Verhältnis von weniger als 0,09 Vol.-% in der Atmosphäre vorliegt.

6. Verfahren nach Anspruch 1, **dadurch gekennzeichnet, dass** das von außen in die Aluminiumhydroxidbeschickung eingebrachte Rekristallisationsmodifiziermittel auf Siliziumbasis in flüssiger Form oder in Form einer wässrigen Suspension aus Siliziumteilchen oder einer Siliziumverbindung dispergiert wird, aus der Siliziumdioxid durch Kalzination erzeugt wird.

7. Verfahren nach Anspruch 1 oder 6, **dadurch gekennzeichnet, dass** das Modifiziermittel auf Siliziumbasis im Gewichtsverhältnis von 400 bis 1500 g SiO₂ pro Tonne Al₂O₂ Aluminiumoxid in die Beschickung eingebracht wird.

8. Verfahren nach Anspruch 1, **dadurch gekennzeichnet, dass** die Kalzinationstemperatur 900 bis 1200°C beträgt.

9. Verfahren nach Anspruch 1, **dadurch gekennzeichnet, dass** die Kalzinationsdauer 1 Stunde bis 3 Stunden beträgt.

10. Verfahren nach Anspruch 1, **dadurch gekennzeichnet, dass** das Einbringen des Modifiziermittels in die feuchte Aluminiumhydroxidbeschickung vor dem Trocknen erfolgt.

11. Verfahren nach Anspruch 11, **dadurch gekennzeichnet, dass** das Einbringen des Modifiziermittels in die getrocknete Aluminiumhydroxidbeschickung bei weniger als 200°C am Eingang des Kalzinationsofens erfolgt.

12. Verfahren nach Anspruch 11, **dadurch gekennzeichnet, dass** das Einbringen des Modifiziermittels in die teilweise dehydratisierte Aluminiumhydroxidbeschickung im Vorkalzinationsbereich des Ofens bei 200 bis 400°C erfolgt.

13. Aluminiumoxidpulver, herstellbar durch das Verfahren nach den Verfahrensansprüchen 1 bis 14, **gekennzeichnet durch** einen mittleren D50-Krlstallitdurchmesser im Bereich von 2,9 bis 3 µm mit einem D90-D10-Verhältnis von etwa 5, einen Siliziumdioxidgehalt von 400 bis 500 ppm und einen Natriumgehalt, ausgedrückt in Na₂O, von 0,2 bis 0,5 %.

14. Aluminiumoxidpulver, herstellbar durch das Verfahren nach den Verfahrensansprüchen 1 bis 14, **gekennzeichnet durch** einen mittleren D50-Kristallitdurchmesser im Bereich von 1,8 bis 2 µm mit einem D90-D10-Verhältnis von etwa 4, einen Siliziumdioxidgehalt von 550 bis 700 ppm und einen Natriumgehalt, ausgedrückt in Na₂O, von 0,2 bis 0,5 %.

15. Aluminiumoxidpulver, herstellbar durch das Verfahren nach den Verfahrensansprüchen 1 bis 14, **gekennzeichnet durch** einen mittleren D50-Kristallitdurchmesser im Bereich von 1 bis 1,2 µm mit einem D90-D10-Verhältnis von etwa 3, einen Siliziumdioxidgehalt von 750 bis 1000 ppm und einen Natriumgehalt, ausgedrückt in Na₂O, von 0,2 bis 0,5 %.

16. Verfahren zur Herstellung von Mahlmedien und -körpern, **dadurch gekennzeichnet, dass** das Aluminiumoxidpulver nach einem der Ansprüche 13 bis 15 verwendet wird.

## Claims

1. Method for manufacturing alumina for ceramics by calcination of alumina trihydrate in the presence of a mineraliser such as a halogenated compound and/or a boron compound, said calcinated alumina being constituted of agglomerates of alpha alumina crystallites **characterised in that** calcination in an industrial oven of the charge of alumina trihydrate at a temperature comprised between 800°C and 1300°C for a length of time from 30 minutes to 4 hours is carried out in the presence simultaneously of a halide compound acting as mineraliser and a recrystallisation modifier of the alumina, with a silica base, said recrystallisation modifier being introduced in the form of micron particles and being uniformly and intimately distributed throughout the charge of alumina trihydrate in a proportion by weight from 300 to 5000 gm of SiO₂ per ton of alumina expressed in Al₂O₃, said alumina trihydrate, obtained by decomposition of a supersaturated solution of sodium aluminate in the presence of a seed for alumina trihydrate according to the Bayer process, being constituted of agglomerates of grains whose size is comprised between 10 and 150µm and containing as residual impurities 0.2% to 0.5% of soda expressed in Na₂O as well as 50 to 200 ppm of silica distributed uniformly in the alumina trihydrate which should be taken into account to determine the total quantity of modifier required in the form of SiO₂ to be introduced in each charge of alumina trihydrate.

2. Method according to claim 1, **characterised in that** the halogenated compound acting as mineraliser is a fluorinated compound chosen from the fluorine group, hydrofluoric acid, aluminium trifluoride, alkaline fluorides.

3. Method according to claim 2, **characterised in that** the fluorinated compound is introduced into the alumina trihydrate in gaseous form or aqueous solution.

4. Method according to one or the other of claims 2 or 3, **characterised in that** the fluorinated compound is introduced into the charge of alumina trihydrate in weight proportion such that the alumina at the exit from the oven contains from 20 to 80 gm of fluorine per ton of Al₂O₃.

5. Method according to any of claims 2 to 4, **characterised in that** the fluorinated compound generates a slightly halogenated atmosphere in the calcination oven, the halogenated gas being present in a proportion lower than 0.09% by volume in said atmosphere.

6. Method according to claim 1, **characterised in that** the recrystallisation modifier with a silica base introduced into the charge of alumina trihydrate by external intake is dispersed in liquid form or in the form of an aqueous suspension of particles of silica or of a siliceous compound generating silica by calcination.

7. Method according to one or the other of claims 1 or 6, **characterised in that** the modifier with silica base is introduced into the charge in the proportion by weight of 400 gm to 1500 gm of SiO₂ per ton of alumina Al₂O₃.

8. Method according to claim 1, **characterised in that** the temperature of calcination is comprised between 900°C and 1200°C.

9. Method according to claim 1, **characterised in that** the length of time of calcination is comprised between 1 hour and 3 hours.

10. Method according to claim 1, **characterised in that** the introduction of the modifier is carried out in the charge of humid alumina trihydrate before drying.

11. Method according to claim 11, **characterised in that** the introduction of the modifier is carried out in the charge of dried alumina trihydrate at less than 200°C at the entry of the calcination oven.

12. Method according to claim 11, **characterised in that** this introduction of the modifier is carried out in the charge of partially dehydrated alumina in the precalcination zone of the oven between 200°C and 400°C.

13. Alumina powder capable of being obtained by the method according to claims 1 to 14 of the method, **characterised by** an average diameter of crystallite D50 centred on 2.9 to 3µm with a D90/D10 ratio of the order of 5, a silica content comprised between 400 and 500 ppm and a sodium content expressed in Na₂O comprised between 0.2% and 0.5%.

14. Alumina powder capable of being obtained by the method according to claims 1 to 14 of the method, **characterised by** an average diameter of crystallite D50 centred on 1.8 to 2µm with a D90/D10 ratio of the order of 4, a silica content comprised between 550 and 700 ppm and a sodium content expressed in Na₂O comprised between 0.2% and 0.5%.

15. Alumina powder capable of being obtained by the method according to claims 1 to 14 of the method, **characterised by** an average diameter of crystallite D50 centred on 1 to 1.2µm with a D90/D10 ratio of the order of 3, a silica content comprised between 750 and 1000 ppm and a sodium content expressed in Na₂O comprised between 0.2% and 0.5%.

16. Method for manufacturing crushing media and elements, **characterised in that** alumina powder is used according to any one of the claims 13 to 15.
